# EUROPÄISCHE PATENTSCHRIFT

(11) **EP 1 640 233 B1**
(45) Veröffentlichungstag und Bekanntmachung des Hinweises auf die Patenterteilung: **02.04.2008**
(21) Anmeldenummer: 05019983.5
(22) Anmeldetag: 14.09.2005
(51) Int. Cl.: B60T 17/22, B61H 5/00, F16D 66/02

(54) **Vorrichtung und Verfahren zur Überwachung der Funktion einer Bremszange**
Apparatus and procedure for monitoring the functioning of a brake caliper
Appareil et procédé pour surveiller le fonctionnement d'un étrier de frein

(30) Priorität: 20.09.2004 DE 102004045846
(43) Veröffentlichungstag der Anmeldung: 29.03.2006
(73) Patentinhaber: Faiveley Transport Remscheid GmbH, 42859 Remscheid (DE)
(72) Erfinder: Ruppert, Helmut, 42857 Remscheid (DE); Keschwari, Mahmud, 30890 Barsinghausen (DE)
(74) Vertreter: Richter, Werdermann, Gerbaulet & Hofmann

(56) Entgegenhaltungen:
- EP-A- 1 384 638
- DE-A1- 3 816 949
- US-A- 5 372 221

## Beschreibung

Die Erfindung betrifft eine Vorrichtung zur Überwachung der Funktion einer eine Bremsscheibe umgreifenden Bremszange, die an einem Fahrwerk eines Fahrzeuges angeordnet ist, mit einem Bremszylinder, der mit zwei Bremshebeln in Wirkverbindung steht, die an einer Drehachse schwenkbar gelagert befestigt sind und an der dem Bremszylinder gegenüberliegenden Seite jeweils einen, der Bremsscheibe zugewandten Bremsbelag aufweisen. Des Weiteren bezieht sich die Erfindung auf ein Verfahren zur Überwachung der Funktion einer Bremszange.

Aus dem Stand der Technik sind eine Vielzahl an Bremszangen bekannt. In der DE 102 36 686 A1 ist eine Bremszange zum Übergreifen einer mit einem Fahrzeugrad drehfest verbundenen Bremsscheibe beschrieben, umfassend ein Gehäuse, eine Kolbenanordnung mit einem in dem Gehäuse verschiebbar geführten ersten Kolben, der durch eine Betriebsbremsanlage des Fahrzeuges parallel zur Scheibenachse verstellbar ist und mit einem in dem Gehäuse parallel zur Scheibenachse verstellbaren zweiten Kolben, der auf einen zur Anlage an der Bremsscheibe bestimmten Bremsbelag wirkt.

In der DE 35 43 456 C2 ist eine Bremszange für Scheibenbremsen insbesondere von Schienenfahrzeugen, mit zwei etwa mittig durch eine justierbare Zugstange miteinander verbundenen Bremszangenhebeln beschrieben, die einerseits an einer Bremsscheibe anpreßbare Bremsbacken tragen und andererseits über je einen Kniehebel an einem etwa parallel zur Längsrichtung der Bremszangenhebel beweglichen Betätigungsglied eines Bremskraftmotors angelenkt sind.

Schadhafte Bremszangen beziehungsweise Bremsbeläge, die beispielsweise durch Fertigungsformfehler, nach thermischen Überlastungen oder durch Verschleiß vorliegen, führen zu nicht zuverlässig funktionierenden Einheiten, so dass eine Information für den Fahrer oder Benutzer des Fahrzeuges über diese Funktionsstörung beziehungsweise diesen Fehlerzustand von Vorteil ist.

Um die Funktion von Bremszangen zu überprüfen, sind diverse Verfahren im Stand der Technik beschrieben. Die DE 38 16 949 A1 offenbart ein Verfahren zur Überwachung der Dicke von Bremsbelägen einer Schreibenbremse, die auf einer Bremszange montiert ist, wobei der sich verringernde Abstand der Bremszange von der Bremsscheibe berührungsfrei gemessen und ein Warnsignal abgegeben wird, wenn eine Mindestdicke der Bremsbeläge unterschritten wird. Ab einem Prüfabstand wird ein der weiteren Abstandsverringerung proportionales Messsignal erzeugt. Mit Erreichen des Prüfabstandes werden aus den seit dem Einsetzen der neuen Bremsbeläge zurückgelegten Kilometern die bis zur Mindestdicke der Bremsbeläge noch zurücklegbaren Kilometer berechnet. Hierbei ist ein Wegaufnehmer zur Erzeugung des Messsignals mit der Bremszange senkrecht zur Bremsscheibe im Bereich ihrer beschliffenen Fläche verbunden. Einer der Nachteile ist jedoch, dass aufgrund der mechanischen und thermischen Belastungen an der Bremszange insbesondere an der Bremsscheibe und den Bremsbelägen der Wegaufnehmer in seiner Funktionsweise gestört werden kann. Zudem ist in der beschriebenen Ausführung von Nachteil, dass der Weggeber auf einem relativ zum Fahrzeugkörper beweglichen Teil montiert ist und damit- die Versorgungskabel des Sensors unzulässigen Belastungen ausgesetzt sind.

Zum allgemeinen Verständnis wird noch auf die DE 100 51 783 A1 hingewiesen.

Es ist Aufgabe der vorliegenden Erfindung eine Vorrichtung und ein Verfahren zur Überwachung der Funktion der Bremszange bereit zustellen, bei dem die genannten Nachteile vermieden werden, insbesondere eine Vorrichtung geschaffen wird, die einfach gestaltet ist und ohne erheblichen Aufwand montiert werden kann, wobei das Verfahren zuverlässige Informationen über die Funktionsweise der Bremszange und den Verschleißzustand ab Bremsbeläge bereitstellt.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Vorrichtung mindestens eine Sensoreinheit pro Bremsbelag am Fahrwerk und/oder fahrzeugseitig angeordnet ist, die eine Weg- und/oder Winkelmessung des Bremshebels zur Funktionsüberwachung während der Bremsaktivierung (von Ruhelage bis zur Bremslage des Bremshebels) durchführt, In Ruhelage sind die Bremsbeläge nicht in Kontakt mit der Bremsscheibe und in Bremslage pressen die Bremsbeläge auf die Bremsscheibe. Die Sensoreinheit befindet sich somit vorteilhafterweise in keinem direkten Kontakt mit der Bremszange, so dass die entstehenden mechanischen und thermischen Belastungen während der Bremsvorgänge auf die Sensoreinheit nicht unmittelbar übertragen werden. Vorzugweise weist die erfindungsgemäße Vorrichtung zwei Sensoreinheiten auf, die jeweils einem Bremshebel zugewandt und/oder zugeordnet sind.

In einer Alternative der Erfindung kann die Sensoreinheit unmittelbar am Fahrwerk oder am Fahrzeug angeordnet sein, wobei kraft- und/oder form- und/oder stoffschlüssige Verbindungen denkbar sind. Vorteilhafterweise kann die Sensoreinheit an einem Halteelement befestigt sein, wobei zweckmäßigerweise der Abstand zwischen der Sensoreinheit und dem Bremshebel gering ist.

In einer weiteren Ausführungsform ist die Sensoreinheit mit einer Auswerteeinheit in Signalverbindung verbunden. Vorzugsweise weist die Auswerteeinheit eine Prozessoreinheit auf, die in einem Mikrokontroller integriert sein kann. Die Prozessoreinheit kann mit einem Speicher verbunden sein, der vorzugsweise ein Siliziumchip ist, der ein sehr geringes Gewicht, ein sehr kleines Bauvolumen aufweist, sowie nur sehr geringe Mengen an Strom benötigt. Die Signalverbindung kann durch eine elektrische oder durch eine drahtlose Verbindung erfolgen, die in einer Ausführungsform eine Funkverbindung sein kann. Die Funkverbindung liegt bevorzugt im GHz-Bereich gemäß dem Blue-Tooth-Standard, der durch die Blue-Tooth-Special-Interest-Group spezifiziert ist.

In einer Ausgestaltung der Erfindung ermittelt die Sensoreinheit berührungslos den Weg und/oder den Winkel, den der Bremshebel von seiner Ruhelage in seine Bremslage relativ zu einem fahrzeugfesten Bezugsystem zurückgelegt hat. In einer bevorzugten Ausgestaltung der Erfindung werden hierbei Weg-Zeit-Verläufe (Istwerte) des Bremshebels ermittelt und in der Auswerteeinheit bearbeitet. Hierbei ist es vorteilhaft die Istwerte mit Sollwerten zu vergleichen, die bereits in der Auswerteeinheit gespeichert sind. Über spezielle Algorithmen kann ermittelt werden, inwieweit beispielsweise eine Funktionsstörung der Bremszange vorliegt.

Des Weiteren wird die Aufgabe durch ein Verfahren zur Überwachung der Funktion einer Bremszange mit den Merkmalen des Anspruches 7 gelöst. In den abhängigen Ansprüchen sind bevorzugte Weiterbildungen des Verfahrens ausgeführt.

Erfindungsgemäß ermittelt die Sensoreinheit in Abhängigkeit von der Zeit Istwerte des zurückgelegten Weges und/oder des Schwenkwinkels des Bremshebels von der Ruhelage (gelöste Bremse) bis zur Bremslage, bei der die Bremsbeläge an der Bremsscheibe anliegen. Diese Istwerte stellen somit Weg-Zeit-Verläufe beziehungsweise Schwenkwinkel-Zeit-Verläufe dar. Anschließend werden diese Istwerte mit zuvor in einer Auswerteeinheit gespeicherten Weg-Zeit-Verläufen beziehungsweise Schwenkwinkel-Zeit-Verläufen (Sollwerte) verglichen. Das erfindungsgemäße Verfahren kann durch spezielle Algorithmen hierbei die Istwerte mit den Sollwerten vergleichen. Besonders vorteilhaft ist, dass durch den Vergleich ermittelt werden kann, ob ein funktionsfähiges Anlegen und Lösen der Bremszange, ein Belagverschleiß des Bremsbelages ein Belagverlust an einer Seite der oder ein Bremsscheibenverschleiß Bremsscheibe vorliegt. Dieser Soll-Ist-Vergleich erfolgt für die Einzelsignale der beiden Sensoren und für die in einem speziellen Algorithmus kombinierten Werte.

Bei kleinen, in kurzen Zeiten zurückgelegten Wegen und/oder Schwenkwinkeln beider Bremshebel handelt es sich um ein funktionsfähiges Anlegen und Lösen der Bremszange. Liegt ein Belagverschleiß des Bremsbeläge vor, legen beide Bremshebel große Wege und/oder Schwenkwinkel in langer Zeit zurück. Handelt es sich um einen einseitigen Bremsbelagverlust, wird diese Störung detektiert, wenn lediglich ein Bremshebel kleine Wege in kurzer Zeiten zurückgelegt. Diese soeben Beschriebenen Funktionszustände sind vorzugsweise durch Zeitfunktionen in Form der Sollwerte abgespeichert. Die Sollwerte stellen somit charakteristische Funktionen beziehungsweise Funktionsverläufe für mögliche Funktionszustände der Bremszange dar. Durch einen Vergleich der Istwerte mit den Sollwerten, die vorteilhafterweise einen gewissen Toleranzbereich aufweisen, kann die Auswerteeinheit eine Überwachung der Bremszangenfunktion beziehungsweise eine Diagnose durchführen, ob ein Belagverschleiß oder ein Belagverlust vorliegt.

In einer alternativen Ausführung gibt die Auswerteeinheit ein Fehlersignal aus, falls die Istwerte außerhalb des Toleranzbereiches liegen. Das Fehlersignal kann beispielsweise über eine Anzeigevorrichtung dem Benutzer sichtbar gemacht werden.

Das Programm mit den entsprechenden Algorithmen und Sollwerten ist in einer Auswerteeinheit gespeichert, der einer oder mehrere Bremsstationen zugeordnet ist.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Es zeigen in rein schematischer Darstellung:
- Fig. 1: eine Draufsicht einer Bremszange, die an einer Bremsscheibe positioniert ist, und
- Fig. 2: eine Seitenansicht der Bremszange gemäß Fig. 1.

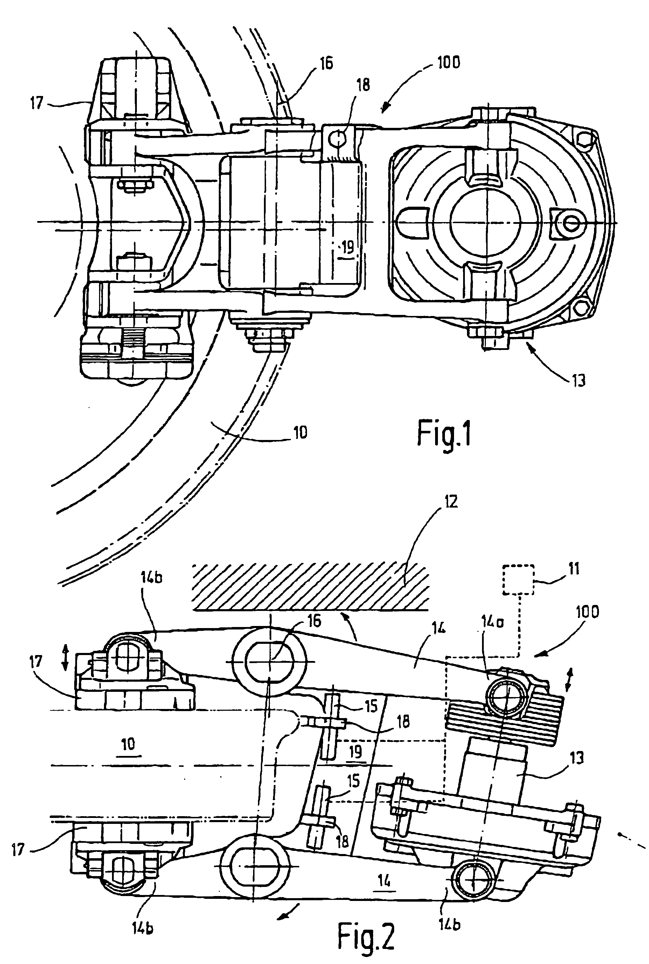

Figur 1 und Figur 2 zeigen eine mit zwei Bremshebeln 14 ausgebildete Bremszange 100, die an einem Fahrwerks 12 eines Fahrzeuges angeordnet ist. Die Erfindung kann beispielsweise sich auf ein Schienenfahrzeug beziehen. Selbstverständlich ist die Vorrichtung sowie das Verfahren auf andere Fahrzeuge anwendbar. Die betätigungsseitigen Enden 14a der Bremshebel 14 sind durch einen Bremsbetätigungszylinder 13 miteinander verbunden. An der dem Bremszylinder 13 gegenüberliegenden Seite umgreift die Bremszange 100 eine Bremsscheibe 10. In der dargestellten Ausführungsform sind an der Innenseite des belagseitigen Endes 14b jedes Bremshebels 14 jeweils ein Bremsbelag 17 befestigt, der auf die Bremsscheibe 10 drückt. Im Mittelbereich sind die Bremshebel 14 um je eine Drehachse 16 schwenkbar gelagert befestigt.

Übt der Bremszylinder 13 eine Druckkraft auf die betätigungsseitigen Enden 14a der Bremshebel 14 aus, vergrößert sich der Abstand zwischen dem oberen und dem unteren Ende 14a der Bremshebel 14, wobei beide Bremshebel 14 zueinander entgegengesetzt um die Drehachse 16 verschwenkt werden. Der obere Bremshebel 14 dreht sich hierbei gegen den Uhrzeigersinn und der untere Bremshebel 14 im Uhrzeigersinn. Gleichzeitig werden die an der dem Bremszylinder 16 gegenüberliegenden Seite angeordneten Bremsbeläge 17 auf die Bremsscheibe 10 gepresst, wodurch eine Bremsung ausgelöst wird. Das Lösen der Bremse erfolgt auf umgekehrten Weg.

An jedem Bremshebel 14 ist eine Sensoreinheit 15 angeordnet, die jeweils den zurückgelegten Weg und den Schwenkwinkel des zugeordneten Bremshebels 14 von der Ruhelage bis zur Bremslage in Abhängigkeit von der Zeit misst. Beide Sensoreinheiten 15 sind vorteilhafterweise fahrzeugseitig an der wagenfesten Bremsbrücke 19 angeordnet. Die Sensoreinheiten 15 werden bei der vorliegenden Ausführungsform der Erfindung durch jeweils ein Halteelement 18 in der entsprechenden Position gehalten, wobei die Sensoreinheiten 15 zu dem jeweiligen Bremshebel 14 einen geringen Abstand aufweisen.

Die von den Sensoreinheiten 15 gemessenen Istwerte werden über einen nicht dargestellten AD-Wandler einer Auswerteeinheit 11 übermittelt. Die Auswerteeinheit 11 umfasst hierbei eine Prozessoreinheit mit einem Mikrokontroller und einem Speicher, in dem die Istwerte gespeichert werden. Des Weiteren sind in der Auswerteeinheit 11 charakteristische Weg-Zeit-Verläufe sowie Schwenkwinkel-Zeit-Verläufe in Form von Sollwerten gespeichert, die für bestimmte Funktionszustände der Bremszange 100 stehen. Die Auswerteeinheit 11 vergleicht, welche Sollwertfunktion der gemessenen Istwertfunktion entspricht, so dass anschließend auf den Funktionszustand der Bremszange 100 geschlossen werden kann. Beim Vergleich wird gleichzeitig ein Toleranzbereich mitberücksichtigt. Der Vergleich erfolgt durch einen Algorithmus, der mittels einer Software in der Auswerteeinheit 11 gespeichert ist.

Liegt ein funktionsfähiges Anlegen und Lösen der Bremse vor (Anlegehub), zeichnet sich die dazugehörige Sollwertfunktion dadurch aus, dass beide Bremshebel 14 einen kleinen Weg oder einen kleinen Schwenkwinkel in einer kurzen Zeit zurücklegen. Bei einem großen, in einem langen Zeitraum zurückgelegten Weg und/oder Schwenkwinkel beider Bremshebel 14, welches die entsprechende Soliwertfunktion in ihrem Verlauf wiedergibt, detektiert die Auswerteeinheit 11, dass ein Belagverschleiß der Bremsbeläge 17 vorliegt. Handelt es sich um einen einseitigen Belagsverlust, weist die entsprechende Sollwertfunktion einen Verlauf auf, bei der lediglich ein Bremshebel einen kleinen Weg beziehungsweise Schwenkwinkel in kurzer Zeit zurücklegt. Radsatzquerbewegungen ergeben gleiche Wege, Geschwindigkeiten und Richtungen in beiden Sensbreneinheiten 14 und können so als solche interpretiert werden. Werden bei der ersten Betätigung nach Einbau neuer Beläge sehr große Wege gemessen (detektiert), lässt das auf entsprechenden Verschleiß der Bremsscheibe schließen.

Der Benutzer wird über eine nicht dargestellte Anzeigeeinrichtung über den jeweiligen Funktionszustand informiert und kann somit rechtzeitig reagieren.

### BEZUGSZEICHENLISTE

- 100: Bremszange
- 10: Bremsscheibe
- 11: Auswerteeinheit
- 12: Fahrwerk
- 13: Bremszylinder
- 14: Bremshebel
- 14a: betätigungsseitiges Ende
- 14b: belagseitiges Ende
- 15: Sensoreinheit
- 16: Drehachse
- 17: Bremsbelag
- 18: Halteelement
- 19: Fahrzeugfeste Bremsbrücke

## Patentansprüche

1. Vorrichtung zur Überwachung der Funktion einer eine Bremsscheibe (10) umgreifenden Bremszange (100), die an einem Fahrwerk (12) eines Fahrzeuges angeordnet ist, mit einem Bremszylinder (13), der mit zwei Bremshebeln (14) in Wirkverbindung steht, die an einer Drehachse (16) schwenkbar gelagert befestigt sind und an der dem Bremszylinder (13) gegenüberliegenden Seite jeweils einen, der Bremsscheibe (10) zugewandten Bremsbelag (17) aufweisen,
**dadurch gekennzeichnet,**
**dass** mindestens eine Sensoreinheit (15) pro Bremsbelag (17) am Fahrwerk (12) und/oder fahrzeugseitig (19) angeordnet ist, die eine Weg- und/oder Winkelmessung des Bremshebels (14) in einem fahrzeugfesten Bezugsystem zur Funktionsüberwachung während der Bremsaktivierung durchführt.

2. Vorrichtung nach Anspruch 1,
**dadurch gekennzeichnet,**
**dass** die Sensoreinheit (15) an einem Halteelement (18) angeordnet ist.

3. Vorrichtung nach Anspruch 2.
**dadurch gekennzeichnet,**
**dass** die Sensoreinheit (15) kraftschlüssig und/oder formschlüssig und/oder stoffschlüssig am Halteelement (18) angeordnet ist.

4. Vorrichtung nach einem der genannten Ansprüche,
**dadurch gekennzeichnet,**
**dass** die Sensoreinheit (15) mit einer Auswerteeinheit (11) in Signalverbindung steht.

5. Vorrichtung nach Anspruch 4,
**dadurch gekennzeichnet,**
**dass** die Signalverbindung drahtlos, insbesondere eine Funkverbindung ist.

6. Fahrzeug, insbesondere Schienenfahrzeug umfassend eine Vorrichtung nach einem der genannten Ansprüche.

7. Verfahren zur Überwachung der Funktion einer Bremszange (100) mit mindestens einer Sensoreinheit (15) pro Bremsbelag (17) nach einem der vorhergehenden Ansprüche,
**dadurch gekennzeichnet,**
**dass** die Sensoreinheit (15) Istwerte des zurückgelegten Weges und/oder des Schwenkwinkels der Bremshebel (14) von der Ruhelage bis zur Bremslage in Abhängigkeit von der Zeit ermittelt und
die Istwerte mit Sollwerten in einer Auswerteeinheit (11) verglichen werden, wobei durch den Vergleich ein
a) Anlegen und Lösen der Bremszange (100),
b) Belagverschleiß der Bremsbeläge (17) und
c) Belagverlust
d) Bremsscheibenverschleiß (Verschleiß der Bremsscheibe)
ermittelbar ist, wobei
bei kleinen, in kurzen Zeiten zurückgelegten Wegen und/oder Schwenkwinkeln beider Bremshebel (14) Merkmal a),
bei großen, in langen Zeiten zurückgelegten Wegen und/oder Schwenkwinkeln beider Bremshebel (14) Merkmal b)
bei, in kurzen Zeiten zurückgelegten Wegen und/oder großen Schwenkwinkeln lediglich eines Bremshebels (14) Merkmal c) vorliegt, und bei, von der Nulllage im Neuzustand gemessen, sehr großen Wegen (oder bei Wechsel auf neue Beläge, großen Wegen), Merkmal d) vorliegt.

8. Verfahren nach Anspruch 7,
**dadurch gekennzeichnet,**
**dass** die Sollwerte einen Toleranzbereich aufweisen.

9. Verfahren nach Anspruch 7 oder 8,
**dadurch gekennzeichnet,**
**dass** die ermittelten Istwerte über einen AD-Wandler der Auswerteeinheit (11) übermittelt werden.

10. Verfahren nach Anspruch 8 oder 9,
**dadurch gekennzeichnet,**
**dass** die Auswerteeinheit (11) ein Fehlersignal ausgibt, falls die Istwerte außerhalb des Toleranzbereiches liegen.

11. Verfahren nach einem der Ansprüche 7 bis 10,
**dadurch gekennzeichnet,**
**dass** die Auswerteeinheit (11) mit einer Anzeigevorrichtung verbunden ist.

12. Computerprogrammprodukt zur Ausführung des Verfahrens nach einem der vorhergehenden Ansprüche,
**dadurch gekennzeichnet,**
**dass** das Verfahren in einem in dem Computerprogrammprodukt gespeicherten Programm integriert ist.

## Claims

1. Device for monitoring the function of a brake caliper (100) which encompasses a brake disc (10) attached to a chassis (12) of a vehicle, with a brake cylinder (13) operatively connected to two brake levers (14) which are attached on a pivotal bearing to a rotation axis (16) each being provided on the opposing side of the brake cylinder (13) with a brake lining (17) facing the brake disc (10), **characterised in that** at least one sensor unit (15) for each brake lining (17) is arranged at the chassis (12) and/or on the vehicle (19) which performs a braking distance and/or angle measurement of the brake lever (14) in a vehicle-mounted reference system for monitoring the function during the activation of the brake.

2. Device according to Claim 1, **characterised in that** the sensor unit (15) is arranged at a mounting support (18).

3. Device according to Claim 2, **characterised in that** the sensor unit (15) is arranged at the mounting support (18) in a frictional and/or positive and/or firmly bonded manner.

4. Device according to any of the claims mentioned, **characterised in that** the sensor unit (15) is in signal communication with an evaluation unit (11).

5. Device according to Claim 4, **characterised in that** the signal communication is a wireless communication, in particular a radio communication.

6. Vehicle, in particular a rail vehicle comprising a device according to any of the mentioned claims.

7. Method for monitoring the function of a brake caliper (100) with at least one sensor unit (15) per brake lining (17) according to any of the preceding claims,
**characterised in that** the sensor unit (15) ascertains actual values of the distance covered by the brake levers (14) and/or of their pivoting angle from the resting position up to the braking position depending upon the time and that the actual values are compared with the rated values in an evaluation unit (11), the comparison making it possible to determine
a) an activation and a release of the brake caliper (100)
b) a wear and tear of the brake linings (17), and
c) a loss of lining
d) a brake disc wear and tear (wear and tear of the brake disc) where
in the event of short distances covered over brief periods and/or in the event of small pivoting angles of both brake levers (14), feature a) is given,
in the event of large distances covered over long periods and/or in the event of large pivoting angles of both brake levers (14), feature b) is given,
in the event of distances covered over brief periods and/or in the event of large pivoting angles of only one brake lever (14), feature c) is given,
in the event of very large distances (or in the event of the mounting of new linings, large distances), measured from the zero position in a brand new state, feature c) is given.

8. Method according to Claim 7, **characterised in that** the rated values have a tolerance range.

9. Method according to Claim 7 or 8, **characterised in that** the ascertained actual values are transmitted via an analogue/digital converter to the evaluation unit (11).

10. Method according to Claim 8 or 9, **characterised in that** the evaluation unit (11) emits an error signal when the actual values are outside the tolerance range.

11. Method according to any of the Claim 7 to 10, **characterised in that** the evaluation unit (11) is connected to a display unit.

12. Computer programme product for carrying out the method according to any of the preceding claims **characterised in that** the method is integrated in the programme stored in the computer programme product.

## Revendications

1. Dispositif pour le contrôle du fonctionnement d'un étrier de frein (100) entourant un disque de frein (10), lequel est disposé sur un châssis (12) d'un véhicule à moteur, avec un cylindre de frein (13) qui est en liaison fonctionnelle avec deux leviers de frein (14), lesquels sont montés de façon basculante sur un axe de rotation (16) et présentent respectivement une garniture de frein (17) tournée vers le disque de frein (10) sur le côté opposé au cylindre de frein (13), **caractérisé en ce que** au moins une unité de capteur (15) par garniture de frein (17) est disposée sur le châssis (12) et/ou du côté du véhicule (19), laquelle exécute un mesurage de la course et/ou de l'angle du levier de freinage (14) dans un système de référence solidaire du véhicule, pour le contrôle du fonctionnement pendant l'activation du frein.

2. Dispositif selon la revendication 1, **caractérisé en ce que** l'unité de capteur (15) est disposée sur un élément de maintien (18).

3. Dispositif selon la revendication 2, **caractérisé en ce que** l'unité de capteur (15) est disposée par liaison de force et/ou par liaison de forme et/ou par liaison de matière sur l'élément de maintien (18).

4. Dispositif selon l'une des revendications précédentes, **caractérisé en ce que** l'unité de capteur (15) se trouve en liaison de signal avec une unité d'évaluation (11).

5. Dispositif selon la revendication 4, **caractérisé en ce que** la liaison de signal est une liaison sans fil, en particulier une liaison radio.

6. Véhicule, en particulier un véhicule sur rail, comprenant un dispositif selon l'une des revendications précédentes.

7. Dispositif pour le contrôle du fonctionnement d'un étrier de frein (100) avec au moins une unité de capteur (15) par garniture de frein (17) selon l'une des revendications précédentes, **caractérisé en ce que** l'unité de capteur (15) détermine en fonction du temps des valeurs réelles de la course accomplie et/ou de l'angle de basculement des leviers de frein (14) de la position de repos jusqu'à la position de freinage et **en ce que** les valeurs réelles sont comparées avec les valeurs prescrites dans une unité d'évaluation (11), la comparaison permettant de déterminer
a) l'application et le desserrage de l'étrier de frein (100),
b) l'usure des garnitures de frein (17) et
c) la perte de garniture,
d) l'usure de disque de frein (usure du disque de frein),
la caractéristique a) étant présente lors de courses et/ou d'angles de basculement des deux leviers de freinage (14) courts, accomplis en des temps brefs,
la caractéristique b) étant présente lors de courses et/ou d'angles de basculement des deux leviers de freinage (14) importants, accomplis en des temps longs,
la caractéristique c) étant présente lors de courses accomplies en des temps brefs et/ou d'angles de basculement importants d'un seul levier de freinage (14),
et, la caractéristique d) étant présente lors de courses très importantes (ou, en cas de remplacement par des garnitures neuves, des courses importantes), mesuré à partir de la position nulle à l'état neuf.

8. Procédé selon la revendication 7, **caractérisé en ce que** les valeurs prescrites présentent une zone de tolérance.

9. Procédé selon les revendications 7 ou 8, **caractérisé en ce que** les valeurs réelles déterminées sont transmises par un convertisseur A/N à l'unité d'évaluation (11).

10. Procédé selon les revendications 8 ou 9, **caractérisé en ce que** l'unité d'évaluation (11) délivre un signal d'erreur si les valeurs réelles se trouvent en dehors de la zone de tolérance.

11. Procédé selon les revendications 7 à 10, **caractérisé en ce que** l'unité d'évaluation (11) est reliée à un dispositif indicateur.

12. Produit logiciel informatique pour l'exécution du procédé selon l'une des revendications précédentes, **caractérisé en ce que** le procédé est intégré à un programme mémorisé dans un produit logiciel informatique.
